# FASCICULE DE BREVET EUROPEEN

(11) **EP 0 403 363 B1**
(45) Date de publication et mention de la délivrance du brevet: **01.09.1993**
(21) Numéro de dépôt: 90401613.6
(22) Date de dépôt: 12.06.1990
(51) Int. Cl.: F02M 37/10, F04D 29/60, F04D 29/66

(54) **Perfectionnements aux dispositifs supports de pompe de carburant placée dans un réservoir de véhicule automobile**
Stützvorrichtungen einer Brennstoffpumpe innerhalb eines Kraftfahrzeugtanks
Supports of a fuel pump situated inside a motor vehicle tank

(30) Priorité: 13.06.1989 FR 8907779
(43) Date de publication de la demande: 19.12.1990
(73) Titulaire: JAEGER, F-92303 Levallois-Perret (FR)
(72) Inventeur: Salaun, Thierry, F-95560 Montsouslt (FR)
(74) Mandataire: Martin, Jean-Jacques

(56) Documents cités:
- DE-A- 2 750 081
- DE-A- 3 005 535
- PATENT ABSTRACTS OF JAPAN vol. 7, no. 92 (M-208)(1237) 16 avril 1983,& JP-A-58 015756 (NIPPON DENSO K.K.) 29 janvier 1983,
- PATENT ABSTRACTS OF JAPAN vol. 9, no. 135 (M-386)(1858) 11 juin 1985,& JP-A-60 017264 (NITSUSAN SHIYATAI K.K.) 29 janvier 1985,

## Description

La présente invention concerne un dispositif support de pompe de carburant placée dans un réservoir de véhicule automobile.

Différents dispositifs supports de pompe de carburant ont déjà été proposés.

De tels dispositifs sont par exemple décrits et représentés dans les documents DE-A-30 05 535 et DE-A-36 02135. Ces dispositifs ont pour fonction essentielle de supporter élastiquement les pompes, et de récupérer les variations dimensionnelles éventuelles de celles-ci.

Les dispositifs supports jusqu'ici proposés ont déjà rendu de grands services. Ils ne donnent cependant pas totalement satisfaction.

En particulier, les dispositifs antérieurs comprennent des structures annulaires recevant, ou supportant le corps de pompe. De ce fait, l'assemblage du corps de pompe sur le support associé est assez délicat et long à réaliser, selon la technique antérieure. Par ailleurs, les dispositifs supports jusqu'ici proposés sont souvent volumineux. Enfin, les systèmes classiques ne donnent pas entière satisfaction pour ce qui est de la récupération des variations dimensionnelles des corps de pompes inhérentes à la fabrication, ou résultant par exemple de dilatation thermique.

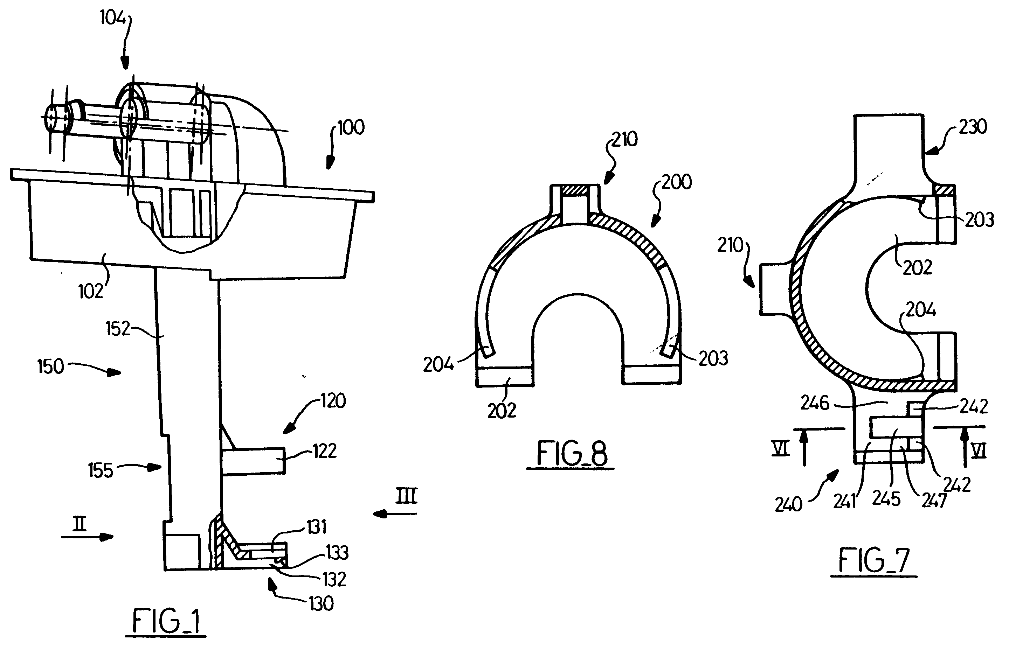

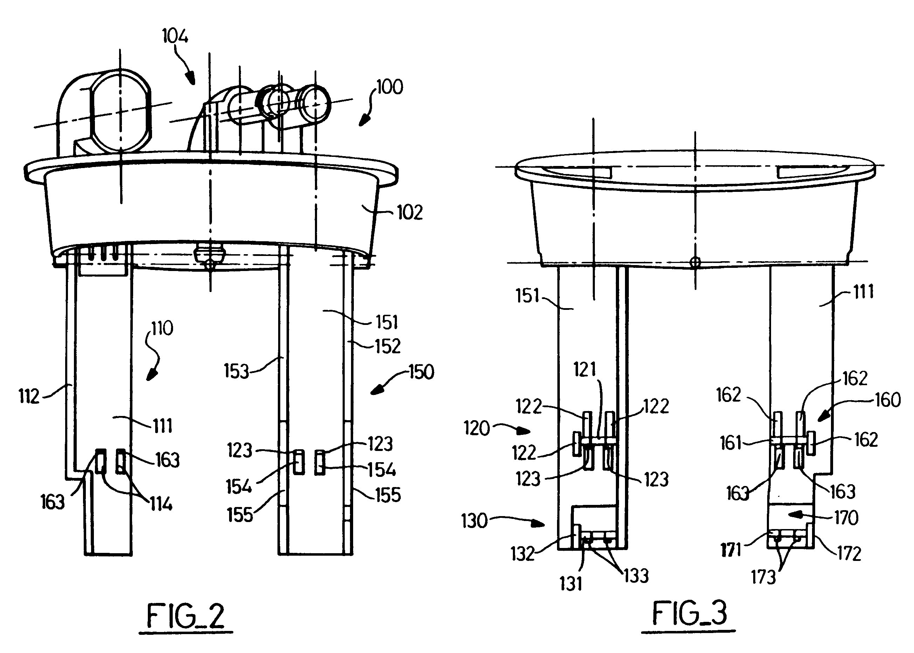

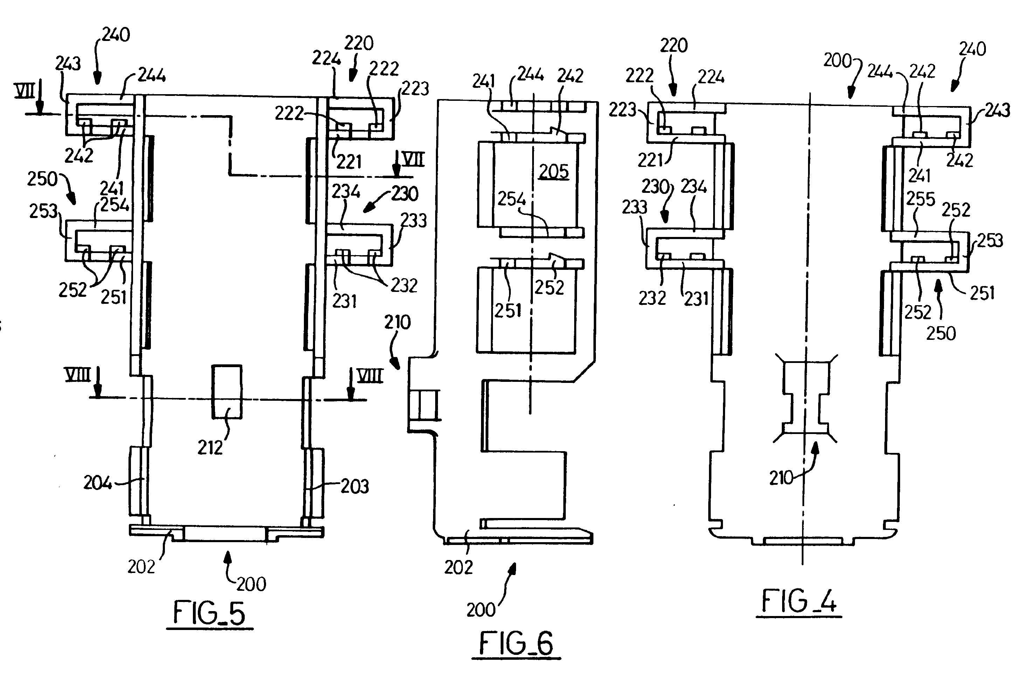

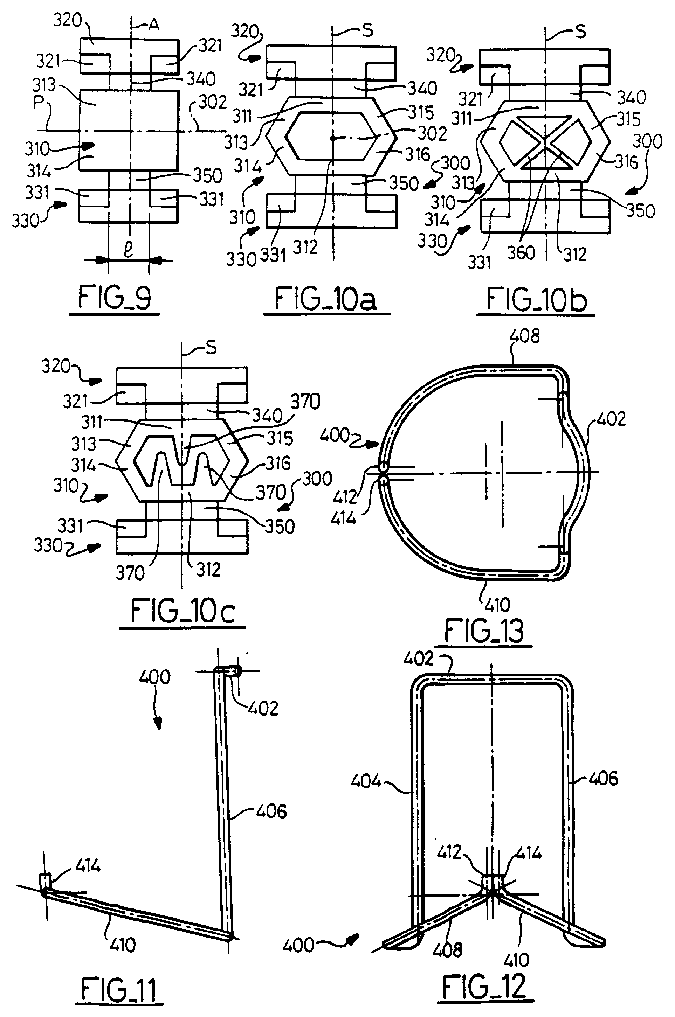

Le document DE-A-2750081 concerne différents dispositifs supports de pompe de carburant pour véhicule automobile. Ce document se propose d'adapter les dispositifs supports de pompe pour permettre d'aspirer la quasi-totalité du carburant contenu dans le réservoir, sans exiger la réalisation de puits d'aspiration dans le fond de celui-ci. Pour cela, le document DE-A-2750081 enseigne de fixer la pompe de carburant sur un équipage sollicité élastiquement vers le fond du réservoir. Cependant, comme indiqué précédemment selon le document DE-A-2750081 les moyens permettant de fixer le corps de pompe sur ledit équipage comprennent des structures annulaires. De telles structures annulaires rendent l'assemblage assez long et assez délicat à réaliser. Selon les figures 1 et 2 du document DE-A-2750081 ces structures annulaires sont formées de colliers de serrage venant en prise avec la tubulure de sortie supérieure de la pompe. Selon les figures 3 et 4 du document DE-A-2750081 le dispositif support de pompe comprend une embase comportant des moyens de fixation sur la paroi supérieure du réservoir et des moyens de réception du corps de pompe possédant un élément de section droite horizontale en "U" ou "C" et possédant des moyens de fixation sur l'embase. Cependant selon ce même mode de réalisation des figures 3 et 4, il est également prévu des colliers de serrage venant en prise avec la tubulure de sortie supérieure de la pompe. Les modes de réalisation représentés sur les figures 5, 6, 7, 8, 13 et 15 comprennent tous des structures annulaires qui entourent totalement le corps de pompe. Les modes de réalisation représentés sur les figures 9, 10, 11, 12 et 14 comprennent tous des structures annulaires fixées sur la tubulaure supérieure de sortie de la pompe.

La présente invention a pour but général d'éliminer les inconvénients de la technique antérieure.

Un premier but de la présente invention est de proposer un nouveau dispositif support facilitant l'assemblage de la pompe.

Un second but de la présente invention est de proposer un nouveau dispositif support peu volumineux.

Un troisième but de la présente invention est de proposer un nouveau dispositif support qui permette de récupérer, sans contrainte, toutes variations dimensionnelles du corps de pompe.

Ces buts sont atteints selon la présente invention grâce à un dispositif support du type comprenant :
- une embase comportant des moyens de fixation sur la paroi supérieure du réservoir, laquelle embase possède au moins une colonne suspendue verticalement à un flasque adapté pour être fixé sur la paroi supérieure du réservoir,
- des moyens de réception du corps de pompe possédant un élément de section droite horizontale en "U" et comportant des moyens de fixation sur l'embase, lequel élément est formé d'une chemise ouverte enforme de coquille adaptée pour recevoir le corps de pompe équipé d'un filtre,
- des moyens d'immobilisation adaptés pour immobiliser le corps de pompe dans la chemise et,
- plusieurs amortisseurs fixés sur la chemise, caractérisé par le fait que :
- la chemise ouverte en forme de coquille partiellement obturée à sa partie inférieure par une section de couronne destinée à servir d'appui au corps de pompe équipé d'un filtre, ladite chemise étant adaptée pour recevoir le corps de pompe par simple translation horizontale,
- les moyens d'immobilisation sont fixés sur la chemise, et
- les amortisseurs sont fixés chacun d'une part sur la surface externe de la chemise, d'autre part sur la colonne, pour fixer la chemise sur la colonne.

Cette caractéristique permet en particulier d'engager le corps de pompe dans la chemise, par simple translation latérale relative du corps de pompe par rapport à la chemise. Elle permet par conséquent d'assembler le corps de pompe équipé, en partie inférieure, d'un filtre, dans la chemise, ce que ne permettaient pas les dispositifs antérieurs comprenant des structures supports généralement annulaires.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue latérale d'une embase équipée de colonnes conformes à la présente invention,
- les figures 2 et 3 représentent deux autres vues latérales du même ensemble selon les vues référencées II et III sur la figure 1,
- la figure 4 représente une vue latérale, côté fermé, d'une chemise conforme à la présente invention destinée à recevoir un corps de pompe,
- la figure 5 représente une vue latérale opposée de la même chemise,
- la figure 6 représente une vue latérale orthogonale, partiellement en coupe comme illustré par le plan de coupe référencé VI-VI, sur la figure 7 de la même chemise,
- les figures 7 et 8 représentent des vues en coupe horizontale, de la même chemise selon les plans de coupe référencés VII-VII et VIII-VIII sur la figure 5,
- les figures 9 et 10a représentent deux vues latérales orthogonales d'un amortisseur conforme à la présente invention,
- les figures 10b et 10C représentent deux vues similaires de variantes de l'amortisseur conforme à la présente invention,
- les figures 11 et 12 représentent deux vues latérales orthogonales d'une épingle conçue pour fixer le corps de pompe dans la chemise,
- la figure 13 représente une vue verticale de la même épingle, et
- les figures 14, 15 et 16 représentent des vues d'une chemise conforme à la présente invention, équipée d'amortisseurs et recevant un corps de pompe immobilisé par une épingle.

Pour l'essentiel le dispositif support conforme à la présente invention comprend une embase 100 équipée de deux colonnes verticales 110, 150, une chemise 200, destinée à recevoir un corps de pompe, des amortisseurs 300 conçus pour fixer la chemise 200 sur les colonnes 110, 150, et une épingle 400 permettant d'immobiliser le corps de pompe dans la chemise 200.

On va successivement décrire par la suite l'embase 100, la chemise 200, les amortisseurs 300 et l'épingle 400.

L'embase 100 comprend essentiellement un flasque 102 conçu pour être engagé dans un orifice complémentaire ménagé dans la paroi supérieure du réservoir de carburant, et être fixé sur cette paroi supérieure. Ce flasque 102 peut faire l'objet de nombreux modes de réalisation. Pour cette raison, il ne sera pas décrit en détail par la suite. On notera cependant que de façon connue en soi, ce flasque 102 porte généralement diverses tubulures, servant d'aspiration, de refoulement et d'évent par exemple, portant la référence générale 104 sur les figures 1 et 2.

Les deux colonnes 110, 150 sont suspendues, verticalement, au flasque 102. Les colonnes 110, 150 sont donc circonscriptes dans l'enveloppe circulaire définie par le flasque. Ces colonnes 110, 150 sont formées de préférence de différentes toiles verticales orthogonales entre elles, afin d'assurer la rigidité des colonnes. Ces toiles sont référencées 111, 112, pour la colonne 110 et 151, 152, 153 pour la colonne 150.

Chacune des deux colonnes 110, 150 porte par ailleurs deux fourchettes de fixation 120, 130 pour la colonne 110 et 160, 170 pour la colonne 150. La fourchette 120 est superposée à la fourchette 130. La fourchette 160 est superposée à la fourchette 170. Les fourchettes 120, 130, 160 et 170 sont parallèles entre elles.

Plus précisément la fourchette 120 est à la même hauteur que la fourchette 160, tandis que la fourchette 130 est à la même hauteur que la fourchette 170.

Chacune de ces quatre fourchettes 120, 130, 160 et 170 est formée pour l'essentiel d'un voile plan et horizontal 121, 131, 161, 171 respectivement raccordé sur les toiles 111 et 151. Ces voiles 121, 131, 161, 171 sont rigidifiées par des membrures verticales 122, 132, 162 et 172. Ces voiles 121, 131, 161, 171 sont par ailleurs échancrées, à leur extrémité libre, opposée aux toiles 111 et 151, pour définir des fourchettes comme indiqué précédemment.

Chacun des voiles 121, 131, 161, 171 est muni de plus de dentures, par exemple au nombre de deux, participant à la fixation des amortisseurs 300. Ces dentures sont référencées 123, 133, 163, 173. Selon la représentation donnée sur les figures annexées, ces dentures, de section droite triangulaire sont prévues sur chacune des deux branches des fourches, au voisinage de l'extrémité libre de ces branches opposée aux toiles 111, 151.

On notera sur la figure 2 la présence, dans les toiles 111, 151, d'ouvertures traversantes 114, 154, autorisant la réalisation des dentures 123, 163, lors du moulage de l'ensemble, par simple utilisation de tiroirs mobiles à translation.

De préférence, la colonne 150, qui possède une section droite horizontale en U, définie par les toiles 151, 152 et 153, est conçue pour recevoir un équipage détecteur de niveau indexé sur le fond. La colonne 150 peut être pourvue de tous moyens classiques appropriés, pour supporter cet équipage, par exemple d'échancrure 155 au niveau du bord libre des toiles 152, 153.

De façon avantageuse, l'embase 100 est réalisée en polyacétal.

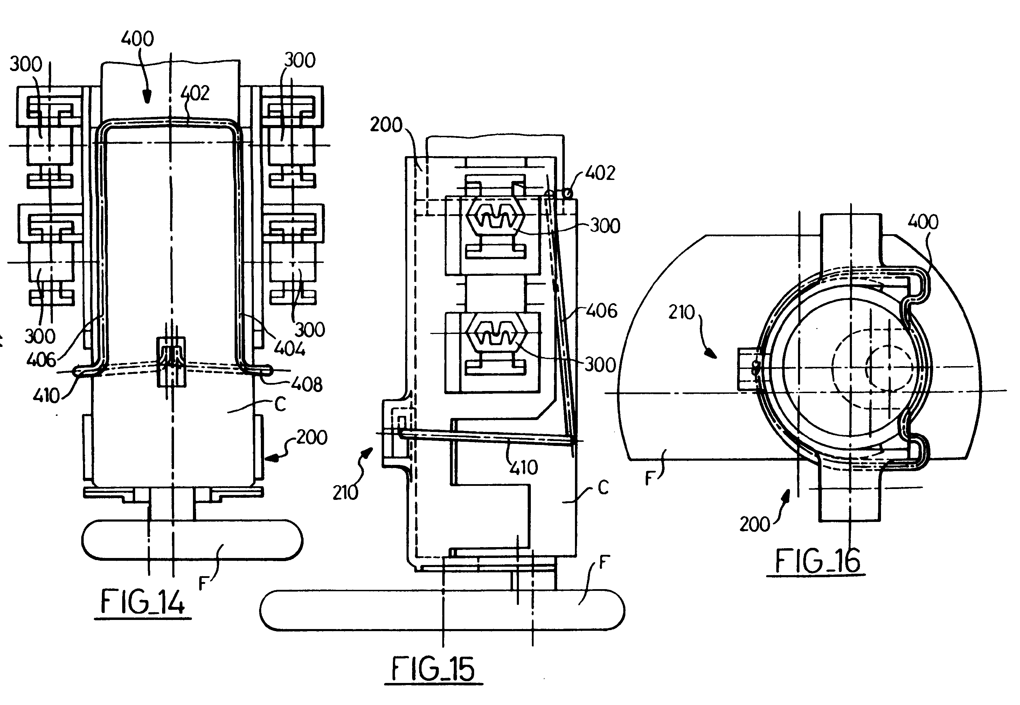

La chemise 200 a pour fonction de recevoir le corps de pompe. Comme représenté sur les figures 14, 15 et 16, les corps de pompe à carburant sont généralement cylindriques de révolution et ont leur axe vertical à l'utilisation. Un tel corps est référencé C sur les figures 14 à 16. On a par ailleurs référencé F, sur les mêmes figures, un filtre classique prévu en partie inférieure de la pompe.

La chemise 200 est formée pour l'essentiel d'une coquille de section droite horizontale en U, pour autoriser l'engagement du corps de pompe C dans la chemise 200, par simple translation horizontale relative. On notera que cet engagement peut être effectué sans démonter le filtre F.

Le rayon interne de la chemise 200 est sensiblement complémentaire du rayon externe du corps de pompe C.

Comme représenté par exemple sur les figures 7 et 8, la chemise 200 est partiellement obturée, à sa partie inférieure, par une section de couronne 202, destinée à servir d'appui au corps de pompe C.

Au moins sur une partie de sa hauteur, la chemise 200 possède des bords libres verticaux opposés légèrement convergents, comme référencé 203, 204, pour participer à l'immobilisation du corps de pompe. Cette immobilisation est assurée essentiellement par une épingle 400 comme évoquée précédemment.

Cette épingle 400 vient en prise avec une structure 210 prévue sur la surface extérieure de la coquille 200, à l'opposé de l'ouverture de celle-ci.

Pour l'essentiel cette structure 210 a la forme d'un crochet dirigé vers le bas, et destiné à recevoir les extrémités libres de l'épingle 400 comme représenté sur les figures 14 et 15. Cette structure 210 est venue de moulage, réalisée grâce à un tiroir coulissant, comme le montre l'orifice 212 traversant la coquille 200.

La coquille 200 est munie d'oreilles 220, 230, 240, 250, destinées à recevoir chacune un amortisseur 300 pour fixer la chemise 200 sur les colonnes 110, 150.

Plus précisément, il est prévu quatre oreilles réparties sous forme de deux paires 220, 230 ; 240, 250 diamétralement opposées par rapport à l'axe central de la chemise 200. Les oreilles 220, 230 sont prévues sur une même paroi latérale de la chemise 200. Les oreilles 240, 250 sont prévues sur la paroi latérale diamétralement opposée de la chemise 200.

Ces oreilles 220, 230 ; 240, 250 peuvent faire l'objet de nombreux modes de réalisation. De préférence, elles comprennent chacune au moins un voile horizontal 221, 231, 241, 251, en saillie sur l'extérieur de la chemise 200. Ces voiles 221, 231, 241 et 251 sont échancrés pour définir des fourchettes similaires aux éléments 120, 130, 160 et 170 précités. Les fourchettes formées sur la chemise 200 sont parallèles entre elles et orthogonales à un plan passant par l'axe de la coquille. On aperçoit ainsi sur la figure 7, pour le voile 241, une échancrure centrale 245 délimitant de part et d'autre deux branches 246, 247. Ces voiles sont de même munis de dentures 222, 232, 242 et 252 permettant de fixer les amortisseurs 300. Selon la représentation donnée sur les figures il est prévu deux dentures sur chaque voile 221,231, 241, 251, à raison d'une denture sur chacune des branches des fourchettes, sur la surface supérieure de celles-ci.

Plus précisément encore selon la représentation donnée sur les figures annexées, ces voiles 221, 231, 241 et 251 sont rigidifiés grâce à des membranes, venues de moulage, verticales 223, 233, 243, 253 et horizontales 224, 234, 244, 254, en forme générale de boîtiers.

Le cas échéant, comme cela apparaît notamment sur la figure 6, les parois latérales de la chemise 200 peuvent être largement échancrées comme référencées sous la référence 205, pour conférer une grande souplesse à l'ensemble.

De préférence, la chemise 200 est également réalisée en polyacétal.

On va maintenant décrire la structure des amortisseurs 300 représentés sur les figures 9 et 10.

Pour l'essentiel, chacun de ces amortisseurs 300 comprend un corps souple central 310, deux patins diamétralement opposés 320, 330, et des structures intermédiaires 340, 350 reliant les patins 320, 330 au corps central 310.

Le corps central 310 peut faire l'objet de nombreux modes de réalisation. Pour l'essentiel, il est tubulaire centré sur un axe 302. Selon la représentation de la figure 10a le corps central 310 est hexagonal. Il est formé de deux parois principales planes et parallèles 311, 312, raccordées, au niveau de leurs bords libres, par des paires de parois planes, inclinées entre elles en V, à convexité dirigée vers l'extérieur, référencées 313, 314, 315, 316. Ainsi les parois 313, 314, solidaires entre elles relient un premier bord des parois 311, 312. Les parois 315, 316, solidaires entre elles relient le second bord des parois 311, 312. Les parois 311 à 316 parallèles à l'axe 302 définissent ainsi une structure généralement tubulaire centrée sur cet axe 302. Les patins 320, 330 sont placés en regard des parois 311, 312, sur l'extérieur de celles-ci.

Ces patins 320, 330 sont formés de blocs parallélépipédiques. Les structures de liaison 340, 350 intercalées entre les parois 311, 312 et les patins 320, 330 sont également formées de blocs parallélépipédiques, mais présentent des sections droites inférieures à celles des patins 320, 330. Les blocs de liaison 340, 350 possèdent parallèlement à l'axe 302 une largeur l égale à la largeur des échancrures ménagées dans les voiles 121, 131, 161, 171, 221, 231, 241 et 251, pour permettre leur engagement sur les fourches précitées solidaires des colonnes 110, 150 et de la chemise 200.

De préférence chacun des patins 320, 330 est pourvu d'évidements 321, 331 sur chacun des angles de sa face dirigée vers le corps central 310. Ces évidements 321, 331 sont destinés à recevoir les dentures 123, 133, 163, 173, 222, 232, 242 et 252.

On notera que les amortisseurs 300 représentés sur les figures 9 et 10a présentent une triple symétrie :
- par rapport à un plan principal P passant par l'axe 302 et par la ligne de jonction entre les parois 313, 314 et la ligne de jonction entre les parois 315, 316, soit parallèle aux parois principales 311, 314,
- par rapport à un plan secondaire S passant par l'axe 302, perpendiculaire aux parois 311, 312 et parallèle à la largeur des blocs de liaison 340, 350,
- par rapport à un plan auxiliaire A perpendiculaire à l'axe 302 et perpendiculaire aux parois 311, 312 et perpendiculaire à la largeur des blocs de liaison 340, 350.

Pour éviter de trop grandes déformations des amortisseurs 300 par rapport aux plans de symétrie principal P et secondaire S, comme représenté sur la figure 10b, il peut être prévu des membranes de triangulation 360 reliant, en diagonale, les bords des parois principales 340, 350.

En variante, comme représenté sur la figure 10C, ces membranes de triangulation 360 peuvent être remplacées par des doigts enchevêtrés prévus en saillie sur les surfaces internes en regard des parois 311, 312.

Les amortisseurs 300 sont réalisés à base d'élastomère.

L'épingle 400 peut faire l'objet de nombreux modes de réalisation.

Selon les figures 11 à 13 annexées l'épingle 400 comprend une anse supérieure 402, deux branches rectilignes 404, 406 et deux anses inférieures 408, 410.

L'anse supérieure 402 est destinée à prendre appui comme représenté sur la figure 15 sur un décrochement ménagé sur le corps de pompe C. Les branches rectilignes 404, 406, généralement parallèles entre elles, se raccordent aux extrémités de l'anse supérieure 402. Les anses inférieures 408, 410 se raccordent elles-mêmes à l'extrémité inférieure des branches 404, 406. Elles possèdent une ouverture angulaire de l'ordre de 120°, et se terminent par des doigts en saillie vers le haut, 412, 414, destinés à venir en prise avec la structure 210 précitée ménagée sur la chemise 200.

Pour assembler une pompe à carburant sur le dispositif support conforme à la présente invention, on procède comme suit.

Dans un premier temps le corps de pompe C est pré-assemblé dans la chemise 200.

Pour cela le corps de pompe C est engage par translation latérale dans la chemise 200. Il est pré-maintenu dans celle-ci par les bords convergents 203, 204. L'immobilisation du corps de pompe C dans la chemise 200 est achevée grâce à l'épingle 400. Pour cela les anses inférieures 408, 410 de l'épingle étant écartées élastiquement, les doigts 412, 414, sont engagés dans la structure 210, puis l'épingle 400 est basculée pour amener l'anse supérieure 402 sur le décrochement du corps de pompe.

Dans un second temps la chemise 200 est équipée de quatre amortisseurs 300 engagés respectivement sur les voiles 221, 231, 241 et 251. Pour cela, comme représenté sur les figures 14 et 15, les blocs de liaison 340 sont engagés entre les branches des fourchettes formées par les voiles précités.

On notera que dans cette position les corps centraux tubulaires 310 des amortisseurs ont leur axe 302 généralement radial par rapport à l'axe du corps de pompe C. En d'autres termes, les parois 311 à 316 sont orientées sensiblement radialement par rapport à l'axe du corps de pompe.

Dans un troisième temps, pour achever le support de la pompe, il suffit d'engager les blocs de liaison 350 sur les fourchettes 120, 130, 160 et 170 prévues sur les colonnes 110, 150.

Selon le mode de réalisation précédemment décrit l'embase 100 est équipée de deux colonnes verticales 110, 150 recevant la chemise 200.

On peut prévoir une embase 100 équipée d'une seule colonne verticale recevant la chemise 200.

De plus la ou les colonne(s) précitée(s) peu(ven)t être indexée(s) sur le fond. Pour cela la ou les colonne(s) sont guidée(s) pour l'embase mais réalisée(s) séparément de celle-ci et sollicitée(s) élastiquement contre le fond du réservoir.

Par ailleurs, on peut prévoir une répartition des oreilles de fixation 220, 230, 240, 250 différente de celle précédemment décrite et représentée sur les figures annexées, par exemple quatre oreilles sensiblement équi-réparties autour de la chemise 200, à la même hauteur.

## Revendications

1. Dispositif support de pompe de carburant placée dans un réservoir de vehicule automobile du type comprenant :
- une embase (100) comportant des moyens de fixation sur la paroi supérieure du réservoir, laquelle embase (100) possède au moins une colonne (110, 150) suspendue verticalement à un flasque (102) adapte pour être fixe sur la paroi supérieure du réservoir,
- des moyens (200) de réception du corps de pompe (C) possédant un élément de section droite horizontale en "U" et comportant des moyens de fixation sur l'embase, lequel élément est forme d'une chemise ouverte en forme de coquille adaptée pour recevoir le corps de pompe équipé d'un filtre (F),
- des moyens d'immobilisation (400) adaptés pour immobiliser le corps de pompe (C) dans la chemise, et
- plusieurs amortisseurs (300) fixes sur la chemise,
caractérisé par le fait que :
- la chemise ouverte en forme de coquille est partiellement obturée à sa partie inférieure par une section de couronne destinée à servir d'appui au corps de pompe (C), ladite chemise étant adaptée pour recevoir le corps de pompe équipé d'un filtre (F) par simple translation horizontale,
- les moyens (400) d'immobilisation sont fixés sur la chemise (200), et
- les amortisseurs (300) sont fixés chacun d'une part sur la surface externe de la chemise (200), d'autre part sur la colonne (110, 150), pour fixer la chemise sur la colonne.

2. Dispositif support selon la revendication 1, caractérisé par le fait que le rayon interne de la chemise (200) est complémentaire du rayon externe du corps de pompe (C).

3. Dispositif support selon l'une des revendication 1 à 2, caractérisé par le fait que la chemise (200) possède des bords libres verticaux opposés (203, 204) légèrement convergents, au moins sur une partie de sa hauteur.

4. Dispositif support selon l'une des revendications 1 à 3, caractérisé par le fait que la chemine (200) est munie d'une structure en crochet (210) destinée à recevoir les extrémités d'une épingle de fixation (400).

5. Dispositif support selon l'une des revendications 1 à 4, caractérisé par le fait que la chemise (200) est munie de fourchettes (220, 230, 240, 250) en saillie sur sa surface externe, destinées à recevoir les amortisseurs (300).

6. Dispositif support selon la revendication 5, caractérisé par le fait que chaque fourchette (220, 230, 240, 250) est munie de dentures (222, 232, 242, 252) pour la fixation d'amortisseurs.

7. Dispositif support selon l'une des revendications 5 ou 6, caractérisé par le fait que la chemise (200) est pourvue de quatre fourchettes (220, 230, 240, 250).

8. Dispositif support selon l'une des revendications 1 à 7, caractérisé par le fait que la chemise (200) est réalisée en polyacétal.

9. Dispositif support selon l'une des revendications 1 à 8, caractérisé par le fait que les moyens adaptés,pour immobiliser le corps de pompe (C) dans la chemise (200), sont formés d'une épingle élastique (400).

10. Dispositif support selon l'une des revendications 1 à 9, caractérisé par le fait que chaque colonne (110, 150) porte au moins une fourchette de fixation (120, 130 , 160, 170).

11. Dispositif support selon la revendication 10, caractérisé par le fait que chaque colonne (110, 150) porte deux fourchettes de fixation (120, 130 ; 160, 170).

12. Dispositif support selon l'une des revendications 7, 10 et 11, caractérisé par le fait que les fourchettes (120, 130, 160, 170) sont horizontales.

13. Dispositif support selon l'une des revendications 7, 10 à 12, caractérisé par le fait que chaque fourchette de fixation est munie de denture (123, 133, 163, 173) pour la fixation d'amortisseurs (300).

14. Dispositif support selon l'une des revendications 1 à 13, caractérisé par le fait que l'embase (100) pourvue d'au moins une colonne (110, 150) est réalisée en polyacétal.

15. Dispositif support selon l'une des revendications 1 à 14, caractérisé par le fait que chaque amortisseur (300) comprend un corps souple central (310), deux patins diamétralement opposés (320, 330) et des structures intermédiaires (340, 350) reliant les patins (320, 330) au corps central (310) qui sont destinées à être engagées dans des fourchettes (120, 130, 160, 170 ; 220, 230, 240, 250) ménagées respectivement sur la ou les colonne(s) (110, 150) et la chemise (200).

16. Dispositif support selon la revendication 15, caractérisé par le fait que le corps souple central (310) a une structure tubulaire.

17. Dispositif support selon la revendication 16, caractérisé par le fait que le corps souple central (310) possède des membranes internes de triangulation en diagonale (360).

18. Dispositif support selon la revendication 16, caractérisé par le fait que le corps souple central (310) possède sur sa surface interne, des doigts enchevêtrés (370) limitant des déformations.

19. Dispositif support selon l'une des revendications 1 à 18, caractérisé par le fait que la chemise (200) est fixée sur la ou les colonne(s) (110, 150) par quatre amortisseurs.

20. Dispositif support selon l'une des revendications 15 à 18, caractérisé par le fait que le corps central tubulaire (310) des amortisseurs (300) est ouvert radialement par rapport à l'axe de la pompe.

21. Dispositif support selon l'une des revendications 1 à 20, caractérisé par le fait que les amortisseurs sont réalisés en élastomère.

22. Dispositif support selon la revendication 9, caractérisé par le fait que l'épingle (400) comprend une anse supérieure (402) destinée à prendre appui sur un décrochement ménagé sur la corps de pompe (C), deux branches (404, 406) et deux anses inférieures (408,410) dont les extrémités (412, 414) sont adaptées pour venir en prise avec la chemise (200).

23. Dispositif support selon l'une des revendication 1 à 22, caractérisé par le fait que chaque colonne (110, 150) est indexée sur le fond du réservoir.

## Patentansprüche

1. Stützvorrichtung für eine Kraftstoffpumpe, die in einem Reservoir eines Kraftfahrzeuges angeordnet ist, umfassend:
- einen Sitz (100) mit Mitteln zur Befestigung an der oberen Wand des Reservoirs, welcher Sitz (100) mindestens eine vertikale, von einem Flansch (102) herabhängende Säule (110, 150) zur Befestigung an der oberen Wand des Reservoirs aufweist,
- Aufnahmemittel (200) für den Pumpenkörper (C) mit einem Element von U-förmigem Horizontalquerschnitt und mit Mitteln zur Befestigung am Sitz, wobei das Element von einem offenden Hemd in Form einer Muschelschale gebildet ist, das zur Aufnahme des mit einem Filter (F) ausgerüsteten Pumpenkörpers gestaltet ist,
- Halterungsmittel (400) zum Festlegen der Pumpe (C) in dem Hemd und
- mehrere Dämpfer (300), die an dem Hemd befestigt sind,
dadurch **gekennzeichnet,** daß
- das offene Hemd in Muschelschalenform teilweise in seiner unteren Partie durch einen kronenartigen Abschnitt durchsetzt ist, der zur Abstützung des Pumpenkörpers (C) bestimmt ist, wobei das Hemd zum Einsetzen des mit einem Filter (F) versehenden Pumpenkörpers durch einfache horizontale Translation gestaltet ist,
- die Halterungsmittel (400) am Hemd (200) fixiert sind und
- jeder Dämpfer (300) einesteils an der äußeren Fläche des Hemdes (200) und anderenteils an der Säule (110, 150) befestigt sind, um das Hemd an die Säule anzubinden.

2. Stützvorrichtung nach Anspruch 1, dadurch **gekennzeichnet,** daß die Innenweite des Hemdes (200) komplementär zur Außenweite des Pumpenkörpers (C) ist.

3. Stützvorrichtung nach Anspruch 1 oder 2, dadurch **gekennzeichnet,** daß das Hemd (200) freie vertikale, zueinander weisende, leicht konvergierende Ränder (203, 204) mindestens über einen Bereich seiner Höhe aufweist.

4. Stützvorrichtung nach einem der Ansprüche 1 bis 3, dadurch **gekennzeichnet,** daß das Hemd (200) mit einer Hakenstruktur (210) versehen ist, um die Enden einer Befestigungsspange (400) aufzunehmen.

5. Stützvorrichtung nach einem der Ansprüche 1 bis 4, dadurch **gekennzeichnet,** daß das Hemd mit von seiner Außenoberfläche auskragenden Gabeln (220, 230, 240, 250) versehen ist, welche zum Aufnehmen der Dämpfer (300) bestimmt sind.

6. Stützvorrichtung nach Anspruch 5, dadurch **gekennzeichnet,** daß jede Gabel (220, 230, 240, 250) mit einer Zahnung (222, 232, 242, 252) zur Befestigung der Dämpfer versehen ist.

7. Stützvorrichtung nach Anspruch 5 oder 6, dadurch **gekennzeichnet,** daß das Hemd (200) mit vier Gabeln (220, 230, 240, 250) versehen ist.

8. Stützvorrichtung nach einem der Ansprüche 1 bis 7, dadurch **gekennzeichnet,** daß das Hemd (200) aus Polyacetal besteht.

9. Stützvorrichtung nach einem der Ansprüche 1 bis 8, dadurch **gekennzeichnet,** daß die Halterungsmittel zum Festlegen des Pumpenkörpers (C) im Hemd (200) von einer elastischen Spange (400) gebildet sind.

10. Stützvorrichtung nach einem der Ansprüche 1 bis 9, dadurch **gekennzeichnet,** daß jede Säule (110, 150) mindestens eine Befestigungsgabel (120, 130, 160, 170) trägt.

11. Stützvorrichtung nach Anspruch 10, dadurch **gekennzeichnet,** daß jede Säule (110, 150) zwei Befestigungsgabeln (120, 130, 160, 170) trägt.

12. Stützvorrichtung nach einem der Ansprüche 7, 10 oder 11, dadurch **gekennzeichnet,** daß die Gabeln (120, 130, 160, 170) horizontal angeordnet sind.

13. Stützvorrichtung nach einem der Ansprüche 7, 10, 11 oder 12, dadurch **gekennzeichnet,** daß jede Befestigungsgabel mit einer Zahnung (123, 133, 163, 173) zur Befestigung der Dämpfer (300) versehen ist.

14. Stützvorrichtung nach einem der Ansprüche 1 bis 13, dadurch **gekennzeichnet,** daß der Sitz (100), der mindestens eine Säule (110, 150) aufweist, aus Polyacetal besteht.

15. Stützvorrichtung nach einem der Ansprüche 1 bis 14, dadurch **gekennzeichnet,** daß jeder Dämpfer (300) einen weichen zentralen Körper (310), zwei diametral gegenüberliegend angeordnete Pratzen und Zwischenstrukturen (340, 350) zum Anbinden eines zentralen Körpers (310) an die Pratzen (320, 330) aufweist, welche zum Zusammenwirken mit den Gabeln (120, 130, 160, 170; 220, 230, 240, 250) bestimmt sind, die an den Säulen (110, 150) bzw. am Hemd (200) angeordnet sind.

16. Stützvorrichtung nach Anspsruch 15, dadurch **gekennzeichnet,** daß der weiche zentrale Körper (310) eine Rohrstruktur ist.

17. Stützvorrichtung nach Anspruch 16, dadurch **gekennzeichnet,** daß der weiche zentrale Körper (310) innere, diagonal verlaufende Dreiecksmembranen (360) aufweist.

18. Stützvorrichtung nach Anspruch 16, daurch **gekennzeichnet,** daß der weiche, zentrale Körper (310) ineinandergreifende Finger (370) aufweist, welche Deformationen begrenzen.

19. Stützvorrichtung nach einem der Ansprüche 1 bis 18, dadurch **gekennzeichnet,** daß das Hemd (200) an der oder den Säulen (110, 150) mittels vier Dämpfern fixiert ist.

20. Stützvorrichtung nach einem der Ansprüche 15 bis 18, dadurch **gekennzeichnet,** daß die zentrale Rohrstruktur (310) der Dämpfer (300) radial bezüglich der Pumpenachse offen ist.

21. Stützvorrichtung nach einem Ansprüche 1 bis 20, dadurch **gekennzeichnet,** daß die Dämpfer aus einem Elastomer bestehen.

22. Stützvorrichtung nach Anspruch 9, dadurch **gekennzeichnet,** daß die Spange (400) einen oberen Steg (402) zur Abstützung an einem Absatz am Pumpenkörper (C), zwei Schenkel (404, 406) und zwei untere Stege (408, 410) aufweist, deren Extremitäten (412, 414) zum Angreifen am Hemd (200) gestaltet sind.

23. Stützvorrichtung nach einem der Ansprüche 1 bis 22, daurch **gekennzeicnet,** daß jede Säule (110, 150) am Boden des Reservoirs indexiert ist.

## Claims

1. Support device for a fuel pump located in a motor vehicle tank of the type comprising:
- a base (100) having means of fixing to the top wall of the tank, which base (100) has at least one upright (110, 150) suspended vertically from a plate (102) adapted for being fixed to the top wall of the tank,
- means (200) for receiving the pump body (C), having a member with a U-shaped horizontal cross section and including means for fixing to the base, which member is formed by an open casing in the form of a shell adapted for receiving the pump body fitted with a filter (F),
- immobilisation means (400) adapted for immobilising the pump body (C) in the casing, and
- several dampers (300) fixed to the casing,
characterised by the fact that:
- the open casing in the form of a shell is partially closed off at its bottom by a ring section intended to serve as a support for the pump body (C), the said casing being adapted for receiving the pump body fitted with a filter (F) by means of a simple horizontal translational movement,
- the immobilisation means (400) are fixed to the casing (200), and
- the dampers (300) are each fixed on the one hand to the external surface of the casing (200) and on the other hand to the upright (110, 150), in order to fix the casing to the upright.

2. Support device according to Claim 1, characterised by the fact that the internal radius of the casing (200) is complementary to the external radius of the pump body (C).

3. Support device according to one of Claims 1 to 2, characterised by the fact that the casing (200) has slightly convergent vertical facing free edges (203, 204), at least over a part of its height.

4. Support device according to one of Claims 1 to 3, characterised by the fact that the casing (200) has a hook-shaped structure (210) intended to receive the ends of a fixing pin (400).

5. Support device according to one of Claims 1 to 4, characterised by the fact that the casing (200) has brackets (220, 230, 240, 250) projecting on its external surface, intended to receive the dampers (300).

6. Support device according to Claim 5, characterised by the fact that each bracket (220, 230, 240, 250) has teeth (222, 232, 242, 252) for fixing dampers.

7. Support device according to one of Claims 5 or 6, characterised by the fact that the casing (200) has four brackets (220, 230, 240, 250).

8. Support device according to one of Claims 1 to 7, characterised by the fact that the casing (200) is produced from polyacetal.

9. Support device according to one of Claims 1 to 8, characterised by the fact that the means adapted for immobilising the pump body (C) in the casing (200) are formed by an elastic pin (400).

10. Support device according to one of Claims 1 to 9, characterised by the fact that each upright (110, 150) carries at least one fixing bracket (120, 130, 160, 170).

11. Support device according to Claim 10, characterised by the fact that each upright (110, 150) carries two fixing brackets (120, 130; 160, 170).

12. Support device according to one of Claims 7, 10 and 11, characterised by the fact that the brackets (120, 130, 160, 170) are horizontal.

13. Support device according to one of Claims 7 and 10 to 12, characterised by the fact that each fixing bracket has teeth (123, 133, 163, 173) for fixing dampers (300).

14. Support device according to one of Claims 1 to 13, characterised by the fact that the base (100) provided with at least one upright (110, 150) is produced from polyacetal.

15. Support device according to one of Claims 1 to 14, characterised by the fact that each damper (300) comprises a flexible central body (310), two diametrically opposed shoes (320, 330) and intermediate structures (340, 350) connecting the shoes (320, 330) to the central body (310) which are intended to be engaged in brackets (120, 130, 160, 170; 220, 230, 240, 250) provided respectively on the upright or uprights (110, 150) and the casing (200).

16. Support device according to Claim 15, characterised by the fact that the flexible central body (310) has a tubular structure.

17. Support device according to Claim 16, characterised by the fact that the flexible central body (310) has internal diagonal lattice braces (360).

18. Support device according to Claim 16, characterised by the fact that the flexible central body (310) has, on its internal surface, overlapping fingers (370) limiting deformations.

19. Support device according to one of Claims 1 to 18, characterised by the fact that the casing (200) is fixed to the upright or uprights (110, 150) by means of four dampers.

20. Support device according to one of Claims 15 to 18, characterised by the fact that the tubular central body (310) of the dampers (300) is open radially with respect to the axis of the pump.

21. Support device according to one of Claims 1 to 20, characterised by the fact that the dampers are produced from an elastomer material.

22. Support device according to Claim 9, characterised by the fact that the pin (400) has a top handle (402) intended to bear on a recess provided on the pump body (C), two arms (404, 406) and two bottom handles (408, 410), the ends (412, 414) of which are adapted so as to come into engagement with the casing (200).

23. Support device according to one of Claims 1 to 22, characterised by the fact that each upright (110, 150) is indexed on the base of the tank.
